# EUROPEAN PATENT APPLICATION

(11) **EP 1 479 423 A1**
(43) Date of publication of application: **24.11.2004**
(21) Application number: 04010933.2
(22) Date of filing: 07.05.2004
(51) Int. Cl.: A63F 13/12, H04L 29/06

(54) **Mobile game system and method**

(30) Priority: 19.05.2003 KR 2003031686
(71) Applicant: Samsung Electronics Co., Ltd., Suwon-si, Gyeonggi-do (KR)
(72) Inventor: Kim, Yong-suk, Seo-gu Daejeon (KR)
(74) Representative: Grünecker, Kinkeldey, Stockmair & Schwanhäusser Anwaltssozietät

(57) **Abstract**

A mobile game system including a first mobile device with a first transceiver communicating data with a base station and a second transceiver for short-range data communications; at least one second mobile device communicating with the second transceiver; and a game server communicating with the base station, for sending and receiving data to and from the first mobile device through the base station. The second mobile device communicates with the game server through the first transceiver of the first mobile device. The mobile game system connects slave mobile devices to the mobile communication network and the game server through a few master mobile devices connected to the mobile communication network and the game server so players can enjoy network games. Mobile devices using protocols such as Bluetooth are connected to a master mobile device, even though the mobile devices are not the same, to enable players to enjoy network games.

## Description

### CROSS-REFERENCE TO RELATED APPLICATIONS

This application claims the benefit of Korean Patent Application No. 2003-31686, dated May 19, 2003, in the Korean Intellectual Property Office, the disclosure of which is incorporated herein by reference.

### BACKGROUND OF THE INVENTION

### Field of the Invention

Apparatuses and methods consistent with the present invention relate to a mobile game system, and more particularly, to a mobile game system and a method enabling plural players to play games at a low price when the players simultaneously play games through a network.

### Description of the Related Art

In general, network games refer to games that plural game players play through the same game server. Here, the game server is connected to each player through the lines of a network provider connected to the Internet, and each player shares game data through the game server.

In the meantime, with the commercialization of wireless Internet, network games mainly based on the wired networks can be shared through mobile devices such as cellular phones and PDAs. The mobile devices have an advantage in that players can enjoy network games anywhere and anytime since the mobile devices are not limited to a specific location, unlike personal computers, whereas the mobile devices have a disadvantage in that users have to pay high wireless communication fees compared to the communication fees for a wired network.

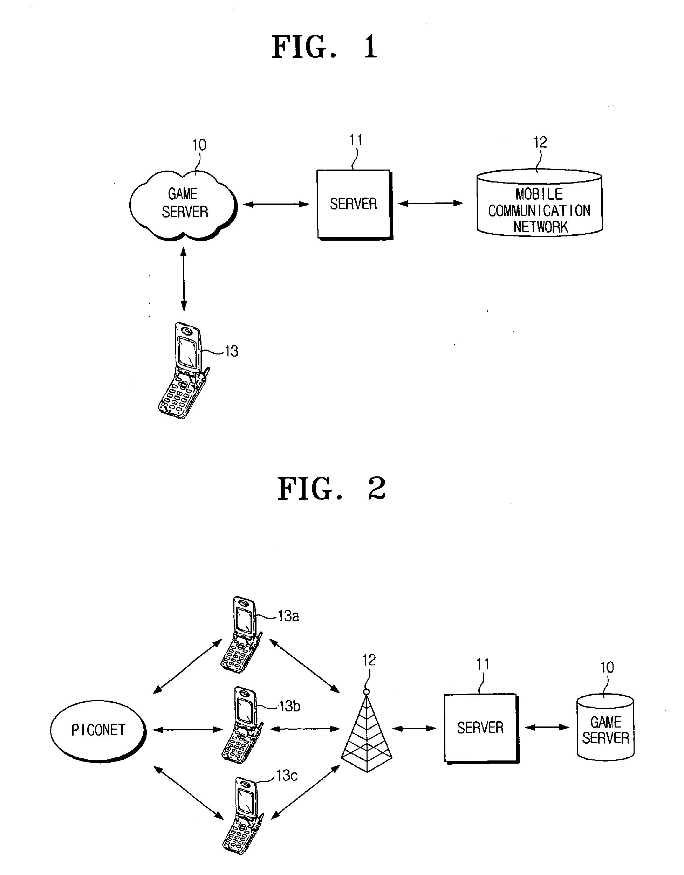

Fig. 1 is a schematic block diagram for showing a conventional mobile game system using a wireless network. In Fig. 1, the conventional mobile game system has a game server 10, a server 11, a mobile communication network 12, and a mobile device 13.

The game server 10 stores games to be downloaded to the mobile device 13 upon a request of the mobile device 13, and has an authorization system for identifying a player when downloading a stored game and charging the identified player with fees.

The server 11 is connected to the game server 10, provides the game server 10 with a connection to the Internet, and, when the mobile device 13 is to connect to the game server 10, the server converts a game server address of text format transferred from the mobile device 13 to the mobile communication network 12 into any of Hyper Text Markup Language (HTML), Hierarchical Data Manipulation Language (HDML), and Wireless Markup Language (WML) that the game server 10 can actually recognize in order for the mobile device 13 to connect to the game server 10. The mobile communication network 12 is the base network for providing voice and data communications with the mobile device 13 such as cellular phones, PDAs, and so on, and charges communication fees having very high hourly rates compared to the wired Internet in general.

A player connects the mobile device 13 to the game server 10 through the game system as above, and sends his or her ID and password to the game server 10, after the sent ID and password is authorized in the game server 10, pays a certain fee, downloads a game stored in the game server 10 to the mobile device 13, and executes the game. Accordingly, the player can enjoy only the downloaded game alone.

Fig. 2 is a block diagram for showing another conventional mobile game system.

Hereinafter, the same reference numerals are used to elements having the same functions as shown in Fig. 1, and descriptions on the same functions will be partially omitted.

The game system shown in Fig. 2 has the game server 10, the server 11, the mobile communication network 12, and plural mobile devices 13a, 13b, and 13c. The shown game system is the invention disclosed in a Republic of Korea Patent Laid-open No. 2000-0054639 wherein the plural mobile devices 13a, 13b, and 13c having the Bluetooth protocol therein download the same game through the mobile communication network 12, build a piconet in a predetermined range of substantially 10m, so that players owning the mobile devices 13a, 13b, and 13c enjoy the multi-player game among themselves. In this method, the mobile devices 13a, 13b, and 13c located in the predetermined range can form a small-scale network of piconet and proceed with a game, but cannot play the game with other players beyond the piconet.

In the meantime, of the mobile devices using Bluetooth, there is a product called N-GAGE on sale from NOKIA Corporation of Finland. The N-GAGE forms a piconet using Bluetooth, and enables players to enjoy network games through the formed piconet. However, there exists a problem in that only the same N-GAGE products enable players to enjoy network games through the piconet therebetween, that is, the N-GAGE products can not share network games with different devices such as PDAs or cellular phones of different companies except for the N-GAGE products.

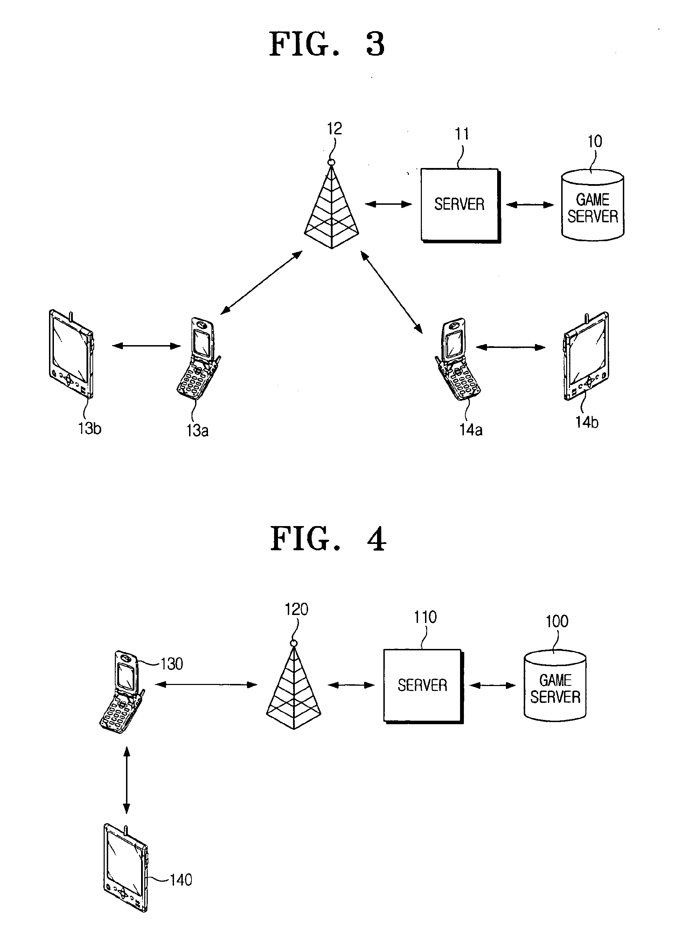

Fig. 3 is a block diagram for showing yet another conventional mobile game system.

The game system shown in Fig. 3 enables players to proceed with games through dedicated game pads 13b and 14b instead of keypads provided on the mobile devices. Accordingly, each of the mobile devices 13a and 14a is provided with a transceiver for communicating data with the game pads 13b and 14b, and the provided transceiver is connected to each of the mobile devices 13a and 14a through the Bluetooth protocol. However, the game system shown in Fig. 3 has to have the mobile devices 13a and 14a connected to the mobile communication network 12 in order to proceed with network games, which causes a problem of paying high communication charges to the mobile communication network 12.

### SUMMARY OF THE INVENTION

The present invention has been devised to solve the above problems, so it is an aspect of the present invention to provide a mobile game system and method enabling players to play network games at a low communication fee through diverse mobile devices.

In order to achieve the above aspect, a mobile game system according to the present invention comprises a first mobile device provided with a first transceiver capable of communicating data with a base station and a second transceiver for short-range data communications; at least one second mobile device capable of communicating with the second transceiver; and a game server capable of mutually communicating with the base station, and for sending and receiving data to and from the first mobile device through the base station, wherein the second mobile device communicates data with the game server through the first transceiver of the first mobile device.

In an exemplary embodiment, the first mobile device serves as a proxy server to which the second mobile device can connect.

In an exemplary embodiment, the second mobile device uses the same communication protocol as the second transceiver, and the communication protocol is the Bluetooth protocol. Further, the first mobile device in an exemplary embodiment, forms a piconet with the second mobile device.

In an exemplary embodiment, the first mobile device is at least one in number, and acts as a proxy server forming a network with plural mobile devices each located in a predetermined range.

In order to achieve the above aspect, a mobile game method according to the present invention comprises steps of connecting a first mobile device to a base station; setting the first mobile device as a proxy server; connecting through a certain protocol to the first mobile device plural second mobile devices located in a predetermined range from the first mobile device; and communicating data by the second mobile devices with the base station through the first mobile device.

In an exemplary embodiment, the step of connecting to the base station further includes a step of having a game server perform predetermined authorization procedures, the game server being connected to the base station and communicating game data with the first mobile device. In an exemplary embodiment, the step of performing authorization procedures is executed only by the first mobile device.

In an exemplary embodiment, the first mobile device can be connected with the plural second mobile devices in the same communication protocol. The second mobile devices, in an exemplary embodiment, use the same communication protocol as the first mobile device. In an exemplary embodiment, the communication protocol is the Bluetooth protocol.

In an exemplary embodiment, the first mobile device forms a piconet with the second mobile devices. Further, in an exemplary embodiment, the first mobile device is at least one in number, and acts as a proxy server forming a network with plural mobile devices each located in a predetermined range.

Hereinafter, the present invention will be described with reference to the accompanying drawings.

### BRIEF DESCRIPTION OF THE DRAWINGS

The invention will be described in detail with reference to the following drawings in which like reference numerals refer to like elements, and wherein:

Fig. 1 is a schematic block diagram for showing a conventional mobile game system using a wireless network;

Fig. 2 is a block diagram for showing another conventional mobile game system;

Fig. 3 is a block diagram for showing yet another conventional mobile game system;

Fig. 4 is a view for conceptually showing a mobile game system according to an embodiment of the present invention;

Fig. 5 is a view for conceptually showing a mobile game system according to another embodiment of the present invention; and

Fig. 6 is a flow chart for showing a mobile game method according to an exemplary embodiment of the present invention.

### DETAILED DESCRIPTION OF THE EXEMPLARY EMBODIMENTS

Fig. 4 is a view for conceptually showing a mobile game system according to an embodiment of the present invention.

A mobile game system shown in Fig. 4 has a game server 100, a server 110, a mobile communication network 120, a master mobile device 130, and a slave mobile device 140.

The game server 100 stores games to be downloaded to the master mobile device 130, and has an authorization system for identifying a player and charging the identified player with fees upon transferring the stored games to the master mobile device 130. Further, when plural players wish to enjoy a multi-player game through the connections to the game server 100, the game server 100 receives game data transferred from each player, and sends the game data to each player's mobile device in order for the plural players to share the game data. Accordingly, the game server 100 enables the plural connected players to play the game in near real-time. In an exemplary embodiment, one player can play interactively against or with another player in the same game, at practically the same time.

The server 110 is connected to the game server 100 and provides the game server with a connection to the Internet, and, when the master mobile device 130 is to connect to the game server 100, converts a game server address in text format transferred to the mobile communication network 120 from the master mobile device 130 into any of HTML, HDML, and WML that the actual game server 100 can recognize, and connects a mobile device such as the mobile game device 130, and the game server 100.

The mobile communication network 120 is a base network for offering voice and data communications with the master mobile device 130, and charges a high hourly communication fee compared to communication fees to connect to wired Internet, in general.

The master mobile device 130 is provided with a first transceiver for performing voice and data communications with the mobile communication network 120, and a second transceiver for performing voice and data communications with neighboring devices in a predetermined range (within 10m, in general) according to the Bluetooth protocol.

The first transceiver is a Code Division Multiple Access (CDMA) voice/data transceiver, in general, and performs voice and data communications with the mobile communication network 120. The second transceiver may be a transceiver according to the Bluetooth 1.1 or 2.0 standard. For reference, seven mobile devices each having the Bluetooth protocol can be connected at a maximum, to one master mobile device in a certain range of about 10m according to the Bluetooth 1.1 standard. Such a network structure is referred to as a piconet. The more detailed descriptions on it can be found out in the Bluetooth specification version 1.1 distributed from the Bluetooth Special Interest Group (Bluetooth SIG).

The master mobile device 130 is connected to the mobile communication network 120 through the first transceiver, and then hooked up, or connected, to the game server 100 via the server 100 of a network provider providing Internet access services. Thereafter, a player having the master mobile device 130 inputs his or her ID and password to the game server 100 to login to the game server 100.

After the player's connection to the game server 100 is established, the master mobile device 130 is connected to at least one slave mobile device such as the slave mobile device 140 located in the predetermined range of, for example, 10m, through the second transceiver based on the Bluetooth protocol to form a piconet. At this time, seven slave mobile devices can be connected at a maximum.

In the meantime, upon forming a piconet, the master mobile device is set as a proxy server. The proxy server is a server acting as a mediator between the game server 100 and the slave mobile device such as the slave mobile device 140, and, when plural mobile devices (not shown) are connected to the master mobile device 130 and data communications are performed between the game server 100 and the plural mobile devices (not shown) hooked up to the master mobile device 130, the proxy server time-division-multiplexes the data communicated between respective mobile devices (not shown) and the game server 100, and allows the respective mobile devices (not shown) to communicate the time division multiplexed data with the game server 100 via the mobile communication network 120. Accordingly, there is no need for a slave mobile device such as the slave mobile device 140 connected to the master mobile device 130 to be hooked up to the mobile communication network 120 or to login to the game server 100. The slave mobile device 140 forming a piconet is connected to the mobile communication network 120 and the game server 100 through the master mobile device 130. Accordingly, there are practically no communication charges for the slave mobile device 140 connected to the master mobile device 130.

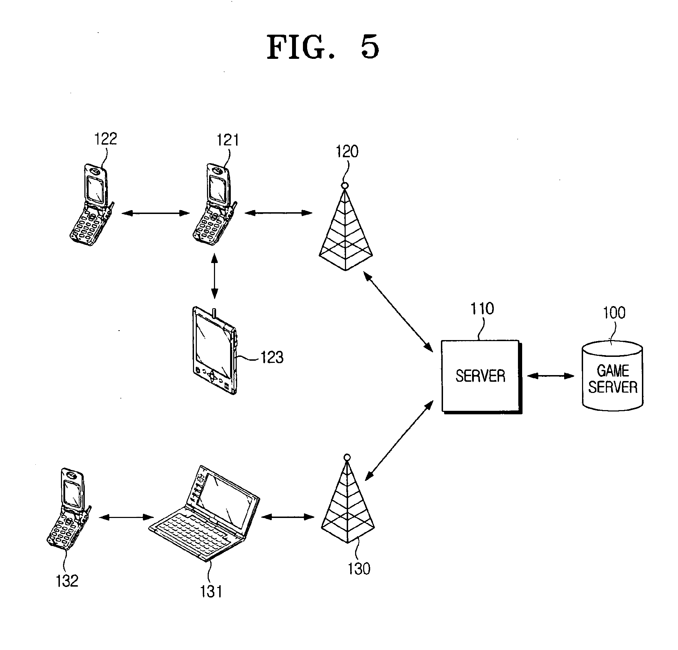

Fig. 5 is a view for conceptually showing a mobile game system according to another embodiment of the present invention.

Hereinafter, the elements having the same functions as in Fig. 4 will be denoted with the same reference numerals as in Fig. 4.

A mobile game system shown in Fig. 5 is provided with the game server 100, the server 110, the first mobile communication network 120, a second mobile communication network 130, a first master mobile device 121, a second master mobile device 131, and plural slave mobile devices 122, 123, and 132 connectable to the first master mobile device 121 and the second master mobile device 131.

As shown in Fig. 5, the first master mobile device 121 and the second master mobile device 131 are independently connected to the first mobile communication network 120 and the second mobile communication network 130, respectively. Here, if a master mobile device such as the master mobile device 121 or 131 can be connected to the mobile communication networks and form a Bluetooth-based piconet, diverse mobile devices such as PDAs, notebook computers, and the like, in addition to hand-held phones, can be used for the master mobile device.

The game server 100 and the server 110 shown in Fig. 5 are the same as described in Fig. 4, so descriptions on the servers 100 and 110 will be omitted.

The first master mobile device 121 forms a piconet about the first mobile communication network 120, and the second master mobile device 131 forms a piconet about the second mobile communication network 130. Here, the first mobile communication network 120 and the second mobile communication network 130 denote base networks arranged at a certain distance therebetween, which may or may not be the mobile communication networks belonging to the same company. In the meantime, the slave mobile devices 122, 123, and 132 connected through the piconets which are respectively formed by the first master mobile device 121 and the second master mobile device 131, do not have to be hooked up to the mobile communication networks 120 and 130 and the game server 100 individually, and even when the slave mobile devices 122, 123, and 132 are compliant to the Bluetooth standard but not the same kind, for example, even when the first master mobile device 121 is a cellular phone and a slave mobile device to be connected to the first master mobile device 121 is a PDA or a notebook computer, a piconet can still be formed. Accordingly, plural players with different kinds of devices can enjoy a network game in nearly real time.

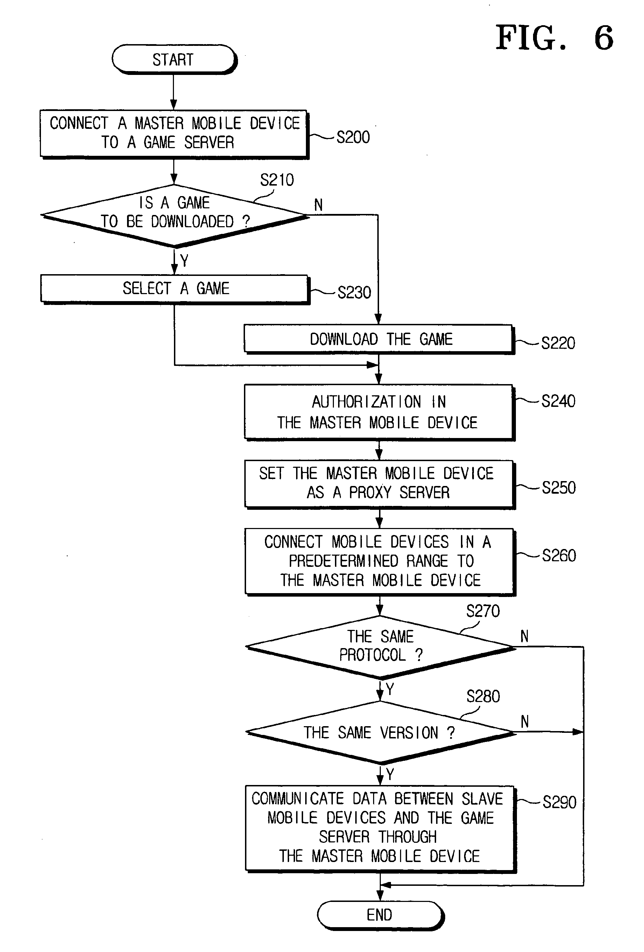

Fig. 6 is a flow chart for showing a mobile game method according to an exemplary embodiment of the present invention.

First, the master mobile device 130 is connected to the game server 100 (S200). Next, a user of the master mobile device 130 decides whether to download a new game from the game server 100 (S210). At this time, the user selects a pre-stored game when he or she wishes to enjoy the pre-stored game in the master mobile device 130 (S230), or downloads a new game from the server when he or she wishes to download the new game (S220). Next, the master mobile device 130 has to login to the game server 100 in order for several players to enjoy the pre-stored or the downloaded game through the network (S240), and the game server 100 receives an ID and a password from the master mobile device 130, and authorizes and charges the master mobile device 130 with fees. Likewise, the game server 100 performs the authorization and charges the fees even when a player downloads a new game.

Next, the master mobile device 130 is set as a proxy server. That is, the master mobile device is set as a server for communicating data with plural slave mobile devices (S250). Next, after the master mobile device 130 is set as a proxy server, the master mobile device 130 is connected to at least one or more slave mobile devices such as 140 located in a predetermined range, for example, 10m (S260). At this time, the master mobile device 130 decides whether a slave mobile device such as 140 to be connected thereto has the same protocol (S270), and, in the case of the same protocol, for example, the Bluetooth protocol, the master mobile device 130 decides whether a version of the game installed in the master and slave devices to be run therein is the same (S280). If the protocol and the game version are decided to be the same, the master mobile device 130 allows the slave mobile device 140 to be connected thereto, and forms a piconet with the connected slave mobile device such as 140. Lastly, the slave mobile device such as 140 forming the piconet with the master mobile device 130 is connected to the game server 100 through the master mobile device connected to the mobile communication network 120, and then starts a network game (S290).

As stated above, the present invention connects plural slave mobile devices to the mobile communication network and the game server through a few master mobile devices connected to the mobile communication network and the game server so that plural players can enjoy network games at a low price. Further, mobile devices having a protocol such as the Bluetooth are connected to a master mobile device, even though the mobile devices are not the same kind, to enable plural player to enjoy the network games.

Although the exemplary embodiments of the present invention have been described, it will be understood by those skilled in the art that the present invention should not be limited to the described exemplary embodiments, but various changes and modifications can be made within the spirit and scope of the present invention as defined by the appended claims.

## Claims

1. A mobile game system, comprising:
a first mobile device comprising a first transceiver capable of communicating with a base station and a second transceiver for short-range data communications;
at least one second mobile device capable of communicating with the second transceiver; and
a game server capable of communicating with the base station, for sending and receiving data to and from the first mobile device through the base station, wherein the at least one second mobile device communicates with the game server through the first transceiver of the first mobile device.

2. The mobile game system as claimed in claim 1, wherein the first mobile device serves as a proxy server to which the second mobile device can connect.

3. The mobile game system as claimed in claim 1, wherein the second mobile device uses a communication protocol used by the second transceiver.

4. The mobile game system as claimed in claim 3, wherein the communication protocol is a Bluetooth protocol.

5. The mobile game system as claimed in claim 4, wherein the first mobile device forms a piconet with the second mobile device.

6. The mobile game system as claimed in claim 1, wherein the first mobile device acts as a proxy server forming a network with a plurality of mobile devices located in a predetermined range.

7. A mobile game method, comprising steps of:
connecting a first mobile device to a base station;
setting the first mobile device as a proxy server;
connecting through a protocol to the first mobile device, at least one of second mobile device located in a predetermined range from the first mobile device; and
communicating by the at least one second mobile device with the base station through the first mobile device.

8. The mobile game method as claimed in claim 7, wherein the step of connecting the first mobile device to the base station comprises a step of performing predetermined authorization procedures by a game server, the game server being connected to the base station and communicating game data with the first mobile device.

9. The mobile game method as claimed in claim 8, wherein the step of performing predetermined authorization procedures is executed only by the first mobile device.

10. The mobile game method as claimed in claim 7, wherein the first mobile device can be connected with the at least one second mobile device using the protocol.

11. The mobile game method as claimed in claim 7, wherein the at least one second mobile device uses the protocolused by the first mobile device.

12. The mobile game method as claimed in claim 7, wherein the protocol is the Bluetooth protocol.

13. The mobile game method as claimed in claim 12, wherein the first mobile device forms a piconet with the at least one second mobile device.

14. The mobile game method as claimed in claim 7, wherein the first mobile device acts as a proxy server forming a network with a plurality of mobile devices located in a predetermined range.

15. The mobile game system as claimed in claim 1, wherein the first mobile device comprises a first multi-player game and the at least second mobile device comprising a second multi-player game, wherein the first multi-player game is played interactively with the second multi-player game.

16. The mobile game system as claimed in claim 15, wherein the first and the second multi-player games are the same.

17. The mobile game method as claimed in claim 7 further comprising:
playing a first multi-player game at the first mobile device; and
playing a second multi-player game at the at least second mobile device, wherein the first multi-player game is played interactively with the second multi-player game.

18. The mobile game method as claimed in claim 17, wherein the first and the second multi-player games are the same.
